Europäisches Patentamt

European Patent Office

Office européen des brevets

(11) Numéro de publication: **0 256 953**
A1

## (12) DEMANDE DE BREVET EUROPEEN

(21) Numéro de dépôt: 87401900.3

(22) Date de dépôt: 18.08.87

(51) Int. Cl.4: **B 29 C 51/02**
B 29 C 51/00, B 29 C 39/02

(30) Priorité: 19.08.86 FR 8611840

(43) Date de publication de la demande:
24.02.88 Bulletin 88/08

(84) Etats contractants désignés:
AT BE CH DE ES FR GB GR IT LI LU NL SE

(71) Demandeur: Queirel, Joel
39, rue Jules Lebocey
F-10800 Troyes (Aube) (FR)

(72) Inventeur: Queirel, Joel
39, rue Jules Lebocey
F-10800 Troyes (Aube) (FR)

(74) Mandataire: Rataboul, Michel
Cabinet Michel Rataboul 69, rue de Richelieu
F-75002 Paris (FR)

(54) Procédé de fabrication d'objets thermoformés plaque intermédiaire pour la mise en oeuvre de ce procédé et objet obtenu.

(57) Le procédé de l'invention est destiné à la fabrication d'objets thermoformés à partir d'une plaque tels que baignoires, bacs à douches, lavabos et autres.

La plaque intermédiaire (1) obtenue par la mise en oeuvre du procédé est caractérisée en ce qu'elle présente une forme et des dimensions coordonnées à celles de l'objet à obtenir, pour diminuer les chutes.

L'objet final thermoformé a des parois 4 qui peuvent avoir une épaisseur E soit pratiquement constante, soit variables mais alors avec une épaisseur plus importante à au moins un endroit destiné à être soumis à des contraintes, soit lors du thermoformage, soit lors de l'utilisation de l'objet, par exemple le fond d'une baignoire.

FIG.3

EP 0 256 953 A1

**Description**

PROCEDE DE FABRICATION D'OBJETS THERMOFORMES PLAQUE INTERMEDIAIRE POUR LA MISE EN OEUVRE DE CE PROCEDE ET OBJET OBTENU

On sait que les plaques de verre ont l'inconvénient d'être très fragiles et l'on a cherché depuis longtemps à les remplacer par des plaques en une matière ayant les mêmes avantages optiques : transparence, limpidité et, en plus, des qualités mécaniques : solidité, élasticité, déformabilité.

C'est ainsi que l'on a mis au point des plaques, ou feuilles, en polyméthacrylate de méthyl, connues dans le commerce sous les noms déposés de "PLEXIGLAS" ou "ALTUGLAS" par exemple.

Comme le souci du fabricant est de procurer un produit optiquement comparable au verre, le polyméthacrylate de méthyle est moulé dans un moule comprenant un cadre et deux faces très lisses et parfaitement parallèles pour que les plaques moulées aient deux faces elles mêles lirses ("glacées") et parallèles, ce qui évite toute déformation optique lors de l'observation à travers ces plaques. Généralement, les faces du moule sont en verre.

La nature même des plaques et leur procédé de fabrication ont pour conséquence de créer des formats et non des éléments de grande longueur taillables sur mesure. Les fabricants se sont donc attachés à standardiser ces formats en fonction des principales demandes du marché.

Lorsque ces plaques sont utilisées pour leur emploi premier, en raison de leurs qualités optiques, on peut prévoir des dimensions standards ou des découpes aussi judicieu ses que possible pour éviter les chutes. Lorsque ces plaques sont utilisées pour l'obtention d'objects thermoformés, on se heurte à des difficultés économiques : les formats disponibles empêchent souvent des découpes rationnelles et l'on se voit alors contraints d'utiliser des surfaces plus grandes qui, souvent, sont proches du double de ce qui eut été réellement nécessaire, non seulement en raison des dimensions des objets à thermoformer mais aussi en raison de leurs formes.

De plus, le thermoformage suppose que l'on maintienne fermement les bords de la plaque tandis que sa zone centrale (à l'intérieur de la pérhphérie) est libre pour se déformer sous l'effet combiné de la chaleur et de la pression. Il s'ensuit un étirage de la matière dans la partie centrale de la plaque et l'objet fini comporte des bords non étirés, plus épais que le milieu qui constitue, précisément, l'endroit où il est le plus sollicité mécaniquement. C'est notamment dans cette zone fragile que se trouve la bonde des appareils sanitaires et où se produisent les chocs thermiques des eaux chaude et froide : baignoires, bacs à douche, lavabos etc.

Pour ces applications, on n'a aucun besoin de la perfection optique des plaques d'origine car on utilise celles ci principalement pour leur formabilité, pour leur brillance et pour leur limpidité. Lorsque la matière est teintée dans la masse, après thermoformage de l'objet, sa face accessible ou "de dessus" apparaît comme étant de la couleur d'origine et a un aspect de glace brillante. Lorsque la matière est transparente, on applique généralement un revêtement coloré sur la face non accessible ou "de dessous" de l'objet thermo formé et le méthacrylate de méthyl transparent donne à l'ensemble un aspect glacé et profond. Par conséquent, ces applications ne nécessitent qu'une seule face glacée et non deux et ignorent les qualités provenant du parallélisme rigoureux des deux faces d'origine puisque le thermoformage dans un moule suppose un contact de la plaque avec ce moule et, aussi poli que soit ce dernier, les qualités optiques sont détruites. Les défauts optiques qui en résultent sont totalement imperceptibles, soit en raison de la coloration dans la masse, soit en raison du revêtement de l'une des faces par un enduit coloré.

Il faut également souligner que la recherche des qua lités optiques impose aux fabricants des méthodes d'élaboration longues, complexes et coûteuses : après coulée dans les moules, ceux-ci sont groupés sur des supports parallèles dits "clayettes" placés dans des étuves dégageant une chaleur provoquant dans les moules la polymérisation complète de la matière, ce qui suppose un temps d'immobilisation de plusieurs heures, selon les épaisseurs, puis on défait les moules, on découpe les plaques aux différents formats voulus dans une épaisseur donnée, puis on place des feuilles de protection pour éviter d'endommager les faces des plaques, puis on stocke les plaques et on les manipule avec soin. Tout cela conduit à des prix de revient élevés pour un produit de haute valeur, alors que l'usage de ce produit pour constituer des objets thermoformés abaisse celui-ci au rang d'une simple bonne matière de base. En d'autres termes, on utilise un produit fini de grande qualité, alors que l'on n'a besoin que d'un produit intermédiaire.

Les brevets GB-A-1.001.018 et FR-A-1.105.610 décrivent tous deux un procédé d'obtention d'articles par moulage de matière synthétique, procédé selon lequel on provoque la polymérisation jusqu'à ce que l'article soit auto-portant mais non complètement durci, puis on retire l'article hors du moule.

Dans GB-A-1.001.018 on termine le durcissement hors du moule car on vise l'augmentation du rendement du moule en diminuant le temps de séjour des articles moulés.

Dans FR-A-1.105.610 on profite de l'état encore plastique de la plaque obtenue pour la mouler aux formes voulues. Ici, il n'y a pas de durcissement de la plaque.

Aucun de ces documents ne prévoit la fabrication de plaques intermédiaires dures par moulage selon des formes et des dimensions coordonnées à celles d'un objet futur et ayant des faces dont les états de surface sont, différents, en prévision des caractéristiques voulues pour l'objet final.

La présente invention remédie aux inconvénients ci dessus et diffère des documents cités en permettant d'utili ser une matière telle que le méthacrylate de méthyle et de le mettre en oeuvre par un procédé beaucoup moins coûteux que ceux utilisés jusqu'à ce jour.

A cette fin, l'invention concerne un procédé pour la fabrication d'objects thermoformés à partir d'une plaque, caractérisé en ce que l'on coule dans un moule ouvert une matière première devant constituer une plaque intermédiaire (1) dont seule celle de ses grandes faces située contre le moule doit être glacée, les dimensions et la forme du moule étant coordonnées à celles de l'objet à thermoformer ultérieurement, puis que l'on provoque le durcissement de la matière première dans le moule pour obtenir une plaque intermédiaire dure à une seule face glacée, puis qu'après stockage éventuel de celle-ci ou la place en regard d'un moule de thermoformage et qu'on la maintient par sa périphérie, puis que l'on procède au thermoformage d'un objet devant ensuite subir des finitions.

Selon d'autres caractéristiques de l'invention :
- On provoque le durcissement de la matière première en deux phases, une phase de durcissement partiel dans le moule et une phase de durcissement complet hors du moule:
- On utilise des moyens pour atténuer, voire empêcher, l'évaporation de la matière première coulée pendant sa phase de durcissement partiel;
- les moyens consistent à placer une plaque sur le moule, après coulage de la matière première, avec interposition d'un joint périphérique souple;
- les moyens consistent à placer une feuille de protection telle qu'une membrane souple au-dessus de la matière première coulée;
- les moyens consistent à effectuer la coulée de matière première sous atmosphère contrôlée vis-à-vis de caractéristiques physiques telles que la prdssion et/ou de caractéristiques chimiques telles que la composition d'un gaz que contient l'atmosphère;
la matière première coulée étant une matière synthétique durcissable par polymérisation, les moyens consistent à provoquer après coulée une polymérisation accélérée de la matière première, pour créer une peau relativement étanche;
- la matière première coulée étant une matière synthétique durcissable par polymérisation, les moyens consistent à provoquer une photo-initiation de la polymérisation par un rayonnement notamment ultra-violet;
- après retrait hors du moule de la matière première coulée, avant son durcissement complet, on termine ce durcissement par un traitement final tel qu'un chauffage en étuve;
- on fabrique une plaque intermédiaire en matière synthétique ayant une épaisseur, plus faible à sa périphérie que dans au moins une zone intérieure à la périphérie, puis que l'on place une telle plaque en regard d'un moule de thermoformage et qu'on la maintient par ses bords, puis que l'on procède au thermoformage qui a pour effet d'étirer la plaque et de l'amincir en deçà de ses bords;
- on fabrique le moule par coulée d'une matière première durcissable appropriée sur une forme constituée par une feuille d'un matériau très lisse tel que du verre, localement déformée avant la coulée au moyen d'organes tels que des vérins pour lui donner une forme non plane;

L'invention a également pour objet une plaque inter médiaire obtenue par la mise en oeuvre du procédé ci-dessus, caractérisée en ce qu'elle présente une forme et des dimensions coordonnées à celles de l'objet à obtenir, pour diminuer les chutes.

Selon d'autres caractéristiques de cette plaque :
- elle est munie de moyens de préhension, et éventuellement d'accrochage, devant faciliter sa manipulation et son stockage, moyens tels que des pattes percées chacune d'au moins un trou;
- elle a une épaisseur plus faible à sa périphérie que dans au moins une zone intérieure à ladite périphérie.

L'invention concerne également un objet thermoformé, notamment appareil sanitaire, obtenu à partir d'une plaque intermédiaire du type ci-dessus, caractérisé en ce qu'il a des parois ayant une épaisseur soit pratiquement constante, soit variable mais alors avec une épaisseur plus importante à au moins un endroit destiné à être soumis à des contraintes, soit lors du thermoformage, soit lors de l'utilisation de l'objet.

Selon une autre caractéristique de cet objet :
- l'objet étant du type présentant une vasque avec des bords supérieurs et une bonde dans sa partie inférieure, les parois présentent, dans la zone munie de la bonde, une épaisseur du même ordre que celle des bords, voire même plus importante.

L'invention sera mieux comprise par la description détaillée ci-après faite en référence au dessin annexé. Bien entendu, la description et le dessin ne sont donnés qu'à titre d'exemple indicatif et non limitatif.

La figure 1 est une vue schématique en perspective d'une plaque intermédiaire conforme à l'invention et munie d'organes de préhension et d'accrochage.

La figure 2 est une vue partielle en coupe d'un objet thermoformé obtenu selon un premier mode de réalisation de l'invention.

La figure 3 est une vue partielle en coupe d'un objet thermoformé obtenu selon un deuxième mode de réalisation de l'invention.

La figure 4 est une vue partielle en coupe d'une plaque intermédiaire réalisée conformément à l'invention, en vue de son thermoformage pour produire un objet du type de celui représenté sur la figure 3.

La figure 5 est une vue schématique en coupe montrant la réalisation d'un moule destiné à produire des plaques intermédiaires du type de celle représentée sur la figure 4.

La figure 6 est une vue schématique en coupe du moule obtenu conformément aux dispositions représentées sur la figure 5.

Afin d'illustrer les avantages de l'invention on va donner un exemple chiffré :
Pour fabriquer selon la méthode classique une baignoire ronde ayant un diamètre de 1.600 millimètres (soit un rayon de 0,8 mètre) par thermoformage d'une plaque de méthacrylate de méthyle, il faut se procurer une plaque rectangulaire standard de 2 mètres par 2,5 mètres dont l'épaisseur est de 4 millimètres. La surface de cette plaque est de 5 mètres carrés. Or, la surface réellement nécessaire est de :

0,8 X 0,8 X 3,1416 = 2 mètres carrés

En admettant qu'il faille prévoir une bande périphérique de 10 centimètres pour maintenir la plaque pendant son thermoformage, le diamètre devient 1.800 millimètres (soit un rayon de 0,9 mètre) et la surface nécessaire est de :

0,9 X 0,9 X 3,1416 = 2,54 mètres carrés

On voit que la chute minimum que l'on doit supporter en pratique est de :

5 - 2,54 = 2,46 mètre carré (soit 50% de chute)

L'invention permet de supprimer ces chutes, du fait qu'elle rend possible l'obtention simple et "sur mesures" de plaques intermédiaires dont les dimensions mais aussi la forme sont coordonnées à celles de l'objet à thermoformer.

En effet, selon l'invention, on coule une matière première dans un moule simple qui peut être sur le lieu même du thermoformage et l'on peut alors combiner la production des plaques intermédiaires et la production des objets thermoformés.

L'invention présente aussi un avantage résultant spécifiquement de ces caractéristiques : étant donné la simplicité du moule, on peut procéder à un démoulage avant durcis sement complet, et terminer ce durcissement hors du moule. Pour cela, il est bon de provoquer un durcissement accéléré, pour que la plaque intermédiaire ait simplement le minimum de cohésion nécessaire à sa manipulation, d'où il résulte que l'on peut disposer d'une nombre relativement restreint de moules par rapport à la production de plaques intermédiaires.

C'est ainsi que l'on peut provoquer une polymérisation rapide de la matière première coulée pour créer une "peau" en surface qui a la double fonction d'empêcher l'évaporation de matière et de donner à la plaque une tenue correcte. Même si elle a des irrégularités car celles-ci n'ont pas d'importance puisqu'on réchauffe la plaque intermédiaire pour la thermoformer. La planéité de la plaque intermédiaire n'est pas indispensable et cette plaque n'a besohn que d'une seule face glacée. Elle peut bien entendu en avoir deux mais cela ne présente pas d'intérêt réel. On peut aussi obtenir un durcissement accéléré par photo-initiation en utilisant un rayonnemdnt ad hoc et l'homme de métier sait d'une part que les rayons ultra-violets ont cette propriété et, d'autre part, que la matière première à couler doit contenir des composants spécifiques, de sorte qu'il n'est pas utile de donner ici plus de détails car ils n'ajouteraient rien aux connais sances de base de l'homme de métier.

Quel que soit le moyen finalement choisi pour provoquer le durcissement minimum, on démoule la plaque intermediaire avant polymérisation complète et on la place dans un lieu de stockage où doit se terminer son durcissement. Comme on le sait, la polymérisation de la matière synthétique équivaut à son durcissement et cette polymérisation est accélérée par l'action de la chaleur. C'est pourquoi on préconise l'introduction de la plaque intermédiaire dans une étuve après sa sortie du moule.

Pendant le temps nécessaire à cette opération, le moule est libre pour couler une autre plaque intermédiaire et cet avantage est important par comparaison avec la méthode classique car celle-ci prévoit la polymérisation complète en étuve et dans le moule.

Comme on l'a déjà indiqué le thermoformage des plaques intermédiaires n'exige pas la planéité parfaite des deux faces de chaque plaque intermédiaire et l'invention s'accomode très bien des éventuelles petites irrégularités qui pourraient provenir d'un démoulage précoce.

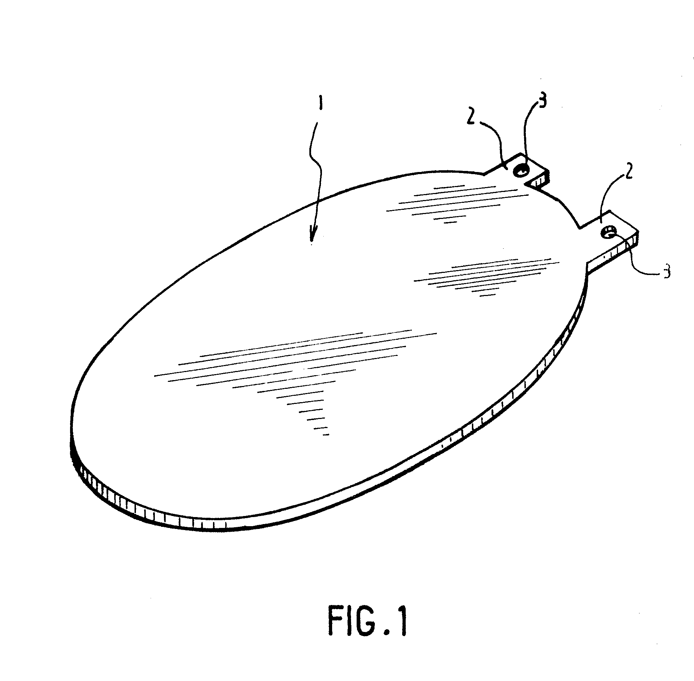

Sur la figure 1, on a représenté un exemple d'une plaque interméiaire obtenue conformément à l'invention. On observe que bette plaque 1 a ici une forme sensiblement ovale pour illustrer l'avant'ge de l'invention selon lequel on peut donner au moule d'obtention des plaques intermédiaires n'importe quelle forme et l'on choisit celle-ci en fonction des formes de l'objet à thermoformer pour minimiser les chutes (voire même les supprimer complètement) et faciliter les opérations de thermoformage.

On peut, en particulier, prévoir des éléments qui ne s'inscrivent pas dans un contour régulier. Ici, on a prévu deux pattes 2 traversées d'un trou 3 qui constituent des moyens pratiques pour manipuler et stocker la plaque intermédiaire 1 à sa sortie du moule. La plaque 1 peut être saisie par les pattes 2 au moyen de pinces ou de crochets engagés dans les trous 3. Il est possible de démouler la plaque 1 avant son complet durcissement et de terminer celui-ci dans une étuve équipée de moyens d'accrochage adaptés aux pattes 2 et à leur trou 3.

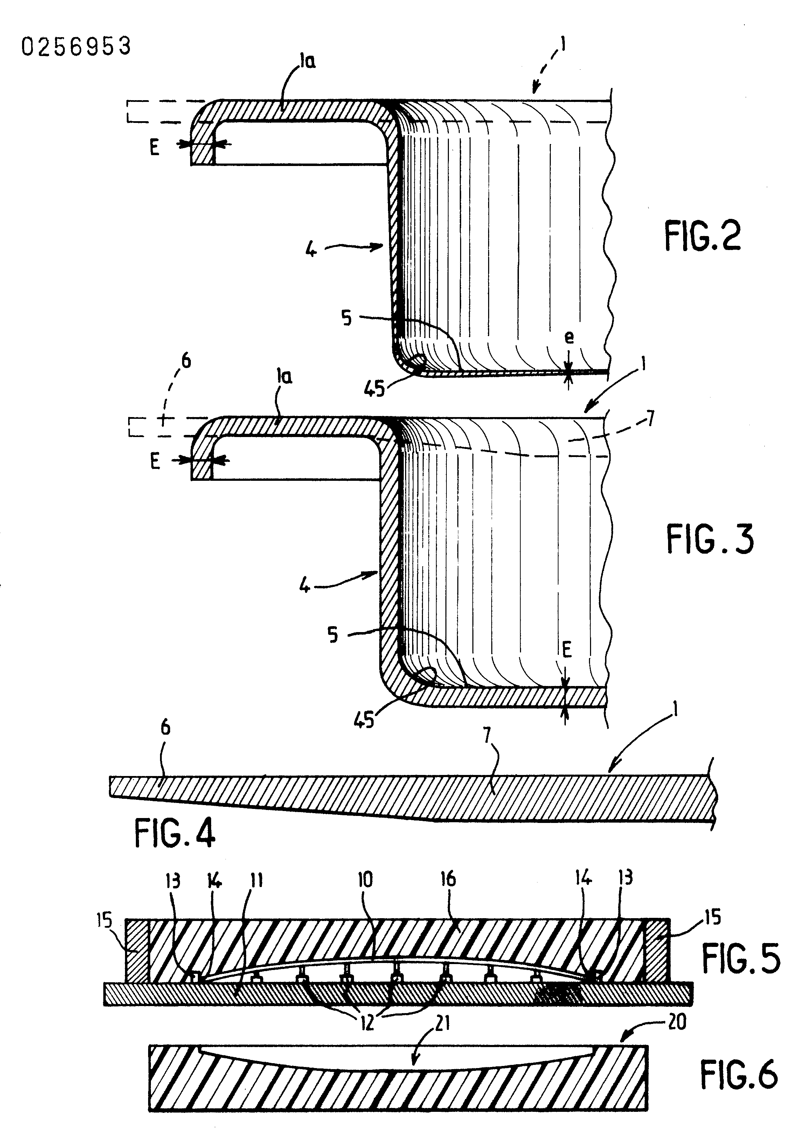

En se reportant maintenant à la figure 2, on voit en coupe une paroi 4 d'un objet thermoformé à partir d'une plaque intermédiaire 1 d'épaisseur constante qui, avant thermoformage, s'étendait dans la position indiquée en pointillé. L'opération de thermoformage, bien connue en elle-même, pro voque l'étirage de la plaque 1 puisque celle ci est plane à l'origine et devient un objet en volume ayant extérieurement la forme d'un moule (non représenté). Cette opération se fait en chauffant la plaque intermédiaire 1 et en la soumettant à une pression sur sa face supérieure ainsi qu'éventuellement, à tne aspiration sous sa face inférieure. Ces efforts supposent que les bords 1a de la plaque 1 soient énergiquement maintenus, par serrage, contre la périphérie du moule et, de ce fait, ils conservent leur épaisseur d'origine puisqu'ils ne peuvent pas à la fois être immobilisés par sdrrage et étirés. Il en résulte que les bords conservent l'épaisseur E de la plaque 1, tandis que les autres parties de la paroi 4, et en particulier le fond 5, ont une épaisseur variable qui atteint un minimum e dans la zone centrale du fond 5.

Dans la pratique, lorsque l'épaisseur nominale E de la plaque 1 est de 4 millimètres, l'épaisseur e peut n'être que d'environ 0,7 millimètre.

On comprend que cette différence considérable présente des inconvénients car le fond 5 est fragile, du fait de sa finesse, même s'il est renforcé extérieurement. Lorsque l'objet est un appareil sanitaire tel qu'une baignoire, un lavabo ou autre, c'est le fond 5 que subit les plus fortes contraintes d'utilisation : il est percé et muni d'une bonde serrée jusqu'à l'étanchéité, cette bonde reçoit le tuyau d'evacuation des eaux et peut subir des efforts de poussée ou de traction de ce tuyau selon les aléas du montage, l'eau chaude puis l'eau froide provoquent des chocs thermiques, le fond reçoit les objdts qui tombent accidentellement etc.

Un objet réalisé selon une caractéristique de l'invention, au contraire, comme on le voit sur la figure 3, ne présente pas ces inconvénients, du fait que la paroi 4 a une épaisseur E constante, ou sensiblement constante.

Pour cela, on réalise d'abord une plaque intermédiai re 1 (figure 4) qui présente une épaisseur variable : plus fine à sa périphérie 6 que dans une zone centrale 7. On appelle "zone centrale", l'étendue de la plaque intermédiaire 1 située à l'intérieur de la périphérie ou encore en deça de ses bords.

Lors du thermoformage de cette plaque intermédiaire 1 comme on l'a expliqué plus haut, la périphérie 6 est maintenue serrée et ne subit pas d'étirage, celui-ci n'intéressant que la zone centrale 7. Partant d'une plaque 1 d'épaisseur non uniforme, on aboutit à un objet thermoformé par étirage qui, lui, a une épaisseur uniforme. Naturellement, il ne faut pas donner au mot "uniforme" un sens strict car on ne saurait garantir un résultat de haute précision mais, en tout état de cause, le résultat visé est de donner à l'objet thermoformé une épaisseur de paroi qui soit supérieure à ce qu'elle peut être avec les techniques connues, dans ses parties les plus exposées à des chocs, des pressions ou autres contraintes.

C'est pourquoi l'on peut aussi donner à la plaque intermédiaire 1, dans sa zone centrale 7, une épairseur supérieure à celle de la périphérie 6 après thermoformage, de sorte que, finalement, l'objet terminé présente une épaisseur de paroi non constante, certes, mais inégale en faveur des zones les plus exposées et nnn plur au détriment de ces zones.

On peut aussi réaliser la plaque 1 avec plusieurs surépaisseurs, localisées à des endroits qui correspondent des zones de l'cbjet fini devant être particulièrement résistantes : endroit du fond où doit être fixée une bonde, partie de la paroi où doivent être placé un trop-plein, des robinets etc.

Dans le cas typique de la figure 4, on peut prévoir une transition insensible entre la périphérie 6 et la zone centrale 7, comme représenté. On peut aussi, prevoir un transition plus nettement marquée, selon le résultat que l'on recherche, en fonction des expériences réalisées.

L'endroit ou les endroits de la plaque intermédiaire 1 où l'on prévoit une surépaisseur sont choisis non seulement pour correspondre à des parties de l'objet terminé qui doivent subir des contraintes d'usage mais aussi en tenant compte des contraintes subies par la plaque intermédiaire 1 lors du thermoformage. C'est ainsi que l'on peut prévoir un renflement fermé sur lui-même afin que le surcroît de matière qu'il représente se trouve, lors du thermoformage, dans la zone des arêtes 45 de l'objet adjacentes aux parois 4 et au fond 5. On pourrait, aussi, prévoir des bosses aux endroits de la plaque intermédiaire 1 qui correspondront, lors du thermoformage aux coins situés à la recontre d'une arête verticale et deux arêtes horizontales.

Pour fabriquer une plaque intermédiaire 1, on utilise un moule qui n'a besoin que d'une seule grande face car les objets thermoformés ne nécessitent qu'une seule face glacée et non deux. Un tel moule, destiné dans cet exemple à la création d'une plaque intermédiaire d'épaisseur non unifnrme, peut être réalisé comme on va le décrire maintenant en regard des figures 5 et 6.

Afin que la seule grande face du moule devant être lisse ait les qualités voulues de brillance et de limpidité, on utilise une feuille 10 d'un matériau très lisse et le verre répond bien à cet usage. On place la feuille 10 sur une semelle 11 qui porte des vérins 12. En ajustant l'élongation des vérins 12, on donne à la feuille de verre 10 une flèche plus ou moins prononcée et qui se situe, bien entendu, en deça de la limite d'élasticité de la feuille 10. On maintient cette dernière par des organes 13 placés contre ses bords 14 pour l'immobiliser latéralement et l'on place des éléments d'encadrement 15 sur la semelle 11 pour constituer un volume creux dont le fond est formé par la feuille 10 et est donc bombé.

On place un produit facilitant le démoulage sur la face supérieure de la feuille 10, sur le dessus des zones de la semelle 11 situées entre les organes 13 et les éléments d'encadrement 15, ainsi que sur les faces internes de ces éléments 15.

On coule alors un matériau durcissable tel qu'une résine synthétique 16 qui remplit le volume creux. Quand la résine est suffisamment solide, rigide, elle constitue un moule en une seule pièce 20 que l'on a représenté sur la figure 6 après retournement et retrait des éléments 15, des organes 13, de la semelle 11, des vérins 12 et de la feuille 10 dont les bords 14 sont avantageusement biseautés pour former une dépouille favorable au retrait de la feuille 10.

Le moule 20 présente une cavité 21 de forme et de volume correspondant à la plaque intermédiaire que l'on veut mouler en vue de son thermoformage ultérieur.

Pour ce moulage, on coule une matière première telle que de polyméthacrylate de méthyl dans la cavité 21 selon un volume correspondant très sensiblement à celui de ladite cavité 21, compte tenu du retrait de la matière, afin d'obtenir le plus exactement possible les épaisseurs désirées. Ici le moule 20 n'a pas de contrepartie, la matière première coulée prenant le forme du moule pour l'une des deux grandes faces de la plaque intermédiaire et s'étendant à plat par l'effet de la pesanteur pour l'autre grande face.

Ainsi, seule la face de la plaque intermédiaire ayant été au contact du moule 20 a l'aspect glacé provenant de l'état de surface de la feuille de verre 10 lors de la réalisation du moule 20. Cette face glacée est destinée aux parties apparentes de l'objet thermoformé ultérieurement. L'autre face, non glacée, est destinée à recevoir un enduit tel qu'une peinture pour donner à l'objet thermoformé une coloration et/ou un effet décoratif : marbrures etc. Cet enduit s'applique et s'accroche d'autant mieux que la face de la plaque n'est pas glacée et présente, au contraire une relative rugosité propice à retenir l'enduit. Cet avantage n'existe évidemment pas avec les plaques existantes.

Il n'existerait pas non plus si le moule 20 a une contrepartie aussi lisse que son empreinte. Toutefois, on peut préférer dans la pratique avoir un moule à deux grandes faces fermées pour introduire la matière première par un petit côté car cette solution présente l'avantage de minimiser l'évaporation de matière première lors de la phase de durcissement partiel.

Le moulage des plaques peut en effet se faire à l'air libre mais il faut veiller à l'évaporation qui peut se produire de manière d'autant plus marquée que la durée du durcissement partiel est plus longue.

Différents moyens peuvent être utilisés pour minimiser ce phénomène :
Après coulage de la matière, on peut poser une plaque sur le moule, avec interposition d'un joint souple. Il importe peu que la plaque touche ou ne touche pas la matière première coulée car cette plaque ne constitue pas une partie de moule mais une barrière isolant la matière de l'air.

On peut aussi, après coulage, placer une feuille de protection au-dessus de la matière première coulée.

La feuille de protection peut être constituée par une membrane souple étanche posée sur la matière première déjà coulée afin de l'isoler de l'air. Grâce à sa souplesse, la membrane peut suivre le retrait de la matière première et, ainsi, rester constamment à son contact. Cette solution est particulièrement avantageuse quand la matière première a un retrait important, ce qui est le cas du méthacrylate de méthyle: 16 % dans le sens de l'épaisseur de la plaque intermédiaire.

On peut également agir sous vide ou sous atmosphère contrôlée, le choix entre ces solutions étant à la portée de l'homme de métier et dependant de simples expériences de routine en fonction des matières premières et des adjuvents retenus pour constituer les plaques intermédiaires.

On pourrait aussi effectuer la polymérisation complète de la matière première dans un moule fermé, comme on le fait actuellement, mais l'on doit alors disposer d'un plus grand nombre de moules car ceux-ci restent immobilisés beaucoup plus longtemps que si l'on démoule les plaques intermédiaires après un durcissemdnt partiel seulement.

## Revendications

1- Procédé pour la fabrication d'objets thermoformés à partir d'une plaque, caractérisé en ce que l'on coule dans un moule ouvert une matière première devant constituer une plaque intermédiaire (1) dont seule celle de ses grandes faces située contre le moule doit être glacée, les dimensions et la forme du moule étant coordonnées à celles de l'objet à thermoformer ultérieurement, puis que l'on provoque le durcissement de la matière première dans le moule pour obtenir une plaque intermédiaire dure à une seule face glacée, puis qu'après stockage éventuel de celle-ci on la place en regard d'un moule de thermoformage et qu'on la maintient par sa périphérie, puis que l'on procède au thermoformage d'un objet devant ensuite subir des finitions.

2- Procédé selon la revendication 1, caractérisé en ce que l'on provoque le durcissement de la matière première en deux phases, une phase de durcissement partiel dans le moule et une phase de durcissement complet hors du moule.

3- Procédé selon la revendication 2, caractérisé en ce que l'on utilise des moyens pour atténuer, voire empêcher, l'évaporation de la matière première coulée pendant sa phase de durcissement partiel.

4- Procédé selon la revendication 3, caractérisé en ce que les moyens consistent à placer une plaque sur le moule, après coulage de la matière première, avec interposition d'un joint périphérique souple.

5- Procédé selon la revendication 3, caractérisé en ce que les moyens consistent à placer une feuille de protection telle qu'une membrane souple sur la matière première coulée.

6- Procédé selon la revendication 3, caractérisé en ce que les moyens consistent à effectuer la coulée de matière première sous atmosphère contrôlée vis à vis de caractéristiques physiques telles que la pression et/ou de caractéristiques chimiques telles que la composition d'un gaz que contient l'atmosphère.

7- Procédé selon la revendication 3, caractérisé en ce que la matière première coulée étant une matière synthétique durcissable par polymérisation, les moyens consistent à provoquer après coulée une polymérisation accélérée de la matière première, pour créer une peau relativement étanche.

8- Procédé selon la revendication 3, caractérisé en ce que la matière première coulée étant une matière synthétique durcissable par polymérisation, les moyens consistent à provoquer une photo-initiation de la polymérisation par un rayonnement notamment ultra-violet.

9- Procédé selon la revendication 2, caractérisé en ce qu'après retrait hors du moule de la matière première coulée, avant son durcissement complet, on termine ce durcissement par un traitement final tel qu'un chauffage en étuve.

10- Procédé selon la revendication 1, caractérisé en ce que l'on fabrique une plaque intermédiaire (1) en matière synthétique ayant une épaisseur plus faible à sa périphérie (6) que dans au moins une zone (7) intérieure à la périphérie puis que l'on place une telle plaque (1) en regard d'un moule de thermoformage et qu'on la maintient par ses bords (6), puis que l'on procède au thermoformage qui a pour effet d'étirer la plaque (1) et de l'amincir en deça de ses bords.

11- Procédé selon la revendication 10, caractérisé en ce que l'on fabrique le moule (20) par coulée d'une matière première durcissable appropriée sur une forme constituée par une feuille (10) d'un matériau très lisse tel que du verre, localement déformée avant la coulée au moyen d'organes tels que des vérins (12) pour lui donner une forme non plane.

12- Plaque intermédiaire (1) obtenue par la mise en oeuvre du procédé de la revendication 1, caractérisée en ce qu'elle présente une forme et des dimensions coordonnées à celles de l'objet à obtenir, pour diminuer les chutes.

13- Plaque intermédiaire selon la revendication 12, caractérisée en ce qu'elle est munie de moyens de préhension, et éventuellement d'accrochage, devant faciliter sa manipulation et son stockage, moyens tels que des pattes (2) percées chacune d'au moins un trou (3).

14- Plaque intermédiaire selon la revendication 12, caractérisée en ce qu'elle a une épaisseur plus faible à sa périphérie que dans au moins une zone intérieure à ladite périphérie.

15- Objet thermoformé, notamment appareil sanitaire, obtenu à partir d'une plaque intermédiaire selon l'une quelconque des revendications 12 à 14 ci-dessus, caractérisé en ce qu'il a des parois (4) ayant une épaisseur (E) soit pratiquement constante, soit variable mais alors avec une épaisseur plus importante à au moins un endroit destiné à être le plus soumis à des contraintes, soit lors du thermoformage, soit lors de l'utilisation de l'objet.

16- Objet thermoformé selon la revendication 15, caractérisé en ce qu'étant du type présentant une vasque avec des bords supérieurs et une bonde dans sa partie inférieure, les parois (4) présentent, dans la zone (5) munie de la bonde, une épaisseur (E) du même ordre que celle des bords, voire même plus importante.

0256953

FIG.1

0256953

FIG.2

FIG.3

FIG.4

FIG.5

FIG.6

# RAPPORT DE RECHERCHE EUROPEENNE

Office européen des brevets

Numéro de la demande

EP 87 40 1900

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| D,Y | GB-A-1 001 018  (THE NATIONAL CASH REGISTER CO.) * Page 2, lignes 11-19 * | 1,2 | B 29 C  51/02 B 29 C  51/00 B 29 C  39/02 |
| D,A | | 9 | |
| | --- | | |
| D,Y | FR-A-1 105 610  (PETERLITE PRODUCTS LTD) * Page 1, colonne 2 * | 1,2 | |
| D,A | | 12 | |
| | --- | | |
| A | DE-A-3 012 098  (IMCHEMIE KUNSTSTOFF) * Page 3, paragraphe 3 * | 1,2,15 | |
| | --- | | DOMAINES TECHNIQUES RECHERCHES (Int. Cl.4) |
| A | GB-A-  993 393  (LICENTIA PATENT-VERWALTUNG) * En entier * | 3,6 | B 29 C |
| | --- | | |
| A | EP-A-0 071 824  (BALL CORP.) * Figures 3,4 * | 10,12, 14-16 | |
| | --- | | |
| A | BE-A-  683 971  (QUADENS) * Revendication 1 * | 1,2 | |
| | ----- | | |

Le présent rapport de recherche a été établi pour toutes les revendications

| Lieu de la recherche | Date d'achèvement de la recherche | Examinateur |
|---|---|---|
| LA HAYE | 28-10-1987 | ESCHBACH D.P.M. |